# EUROPÄISCHE PATENTANMELDUNG

(11) **EP 3 399 482 A1**
(43) Veröffentlichungstag der Anmeldung: **07.11.2018**
(21) Anmeldenummer: 18170417.2
(22) Anmeldetag: 02.05.2018
(51) Int. Cl.: G06Q 10/08

(54) **VERFAHREN ZUR HANDHABUNG EINES FRACHTCONTAINERS**

(30) Priorität: 02.05.2017 DE 102017207345
(71) Anmelder: Thales Management & Services Deutschland GmbH, 71254 Ditzingen (DE)
(72) Erfinder: STERBAK, Yves, 73269 Hochdorf (DE); TOLKSDORF, Florian, 65611 Brechen (DE); IVANKOVIC, Dragan, London, W13 8QN (GB); TOLKSDORF, Martin, 65611 Brechen (DE); GALATOVIC, Mario, 75015 Bretten-Rinklingen (DE); TIPLE, Abhay, 70188 Stuttgart (DE); GROETING, Phillip, 71634 Ludwigsburg (DE)
(74) Vertreter: Kohler Schmid Möbus Patentanwälte

(57) **Zusammenfassung**

Die Erfindung betrifft ein Verfahren zur Handhabung eines Frachtcontainers (1), der von einem Versender (2) über einen oder mehrere Transporteure (11-14) an einen Empfänger (3) verbracht wird. Für den Frachtcontainer (1) wird elektronischer Frachtbrief (19a) mittels eines gesicherten Erzeugermoduls (17, 41) erzeugt, der in verschlüsselter Form auf einem zentralen Sicherungsserver (7) hinterlegt wird. Der Versender (2) und der Empfänger (3) erhalten jeweils einen elektronischen Schlüssel (S1, S2). Die Transporteure (11-14), und ggf. auch Inspekteure (10) wie die Zollbehörde, können entschlüsselte Teile (21a-24a, 30a) des elektronischen Frachtbriefs (19a) über eine Datenverbindung elektronisch anfordern, insbesondere um sich für den Weitertransport zu legitimieren, oder um den Frachtcontainer (1) überprüfen zu können. Wenn der Empfänger (3) mit dem erhaltenen Frachtcontainer (1) zufrieden ist, übermittelt er elektronisch seinen Schlüssel (S2) an den zentralen Sicherungsserver (7). Der Versender (2) übermittelt elektronisch seinen Schlüssel (S1) an den zentralen Sicherungsserver (7), wenn er den Frachtbrief (19a) freigeben will, insbesondere nachdem er eine vereinbarte Zahlung (37) eines Kaufpreises erhalten hat. Unter gemeinsamer Anwendung der beiden Schlüssel (S1, S2) kann der verschlüsselte elektronische Frachtbrief (19a) auf dem zentralen Sicherungsserver entschlüsselt werden und der entschlüsselte elektronische Frachtbrief (19b) an den Empfänger (3) elektronisch übermittelt werden. Damit ist der Eigentumsübergang an den Empfänger (3) bewirkt. Die Erfindung vereinfacht und verbilligt den Warenaustausch mittels Frachtcontainern (1).

## Beschreibung

Die Erfindung betrifft ein Verfahren zur Handhabung eines Frachtcontainers, der von einem Versender über einen oder mehrere Transporteure an einen Empfänger verbracht wird.

Um Waren aller Art zu transportieren, werden Frachtcontainer eingesetzt. Frachtcontainer können insbesondere auf Schiffen, Lastkraftwagen oder Eisenbahnzügen zwischen verschiedenen Orten verbracht werden. Besonders verbreitet sind Frachtcontainer gemäß den von der Internationalen Seeschifffahrts-Organisation (engl. International Maritime Organization, IMO) festgelegten Normen, niedergelegt etwa in der ISO-Norm 668.

Das Verbringen eines Frachtcontainers von einem Versender (etwa dem Hersteller einer Ware, der den Frachtcontainer mit der Ware befüllt hat) zu einem Empfänger (etwa einem Käufer der Ware, die im Frachtcontainer enthalten ist) erfolgt in aller Regel unter Beteiligung wenigstens eines Transporteurs (etwa einer Reederei oder eines Spediteur oder eines Eisenbahnunternehmens). Für den Frachtcontainer wird dabei ein Frachtbrief (auch genannt Konnossement, engl, bill of lading) ausgestellt. Mit dem Frachtbrief kann sich dessen Inhaber legitimieren, d.h. nachweisen, dass er berechtigt ist, den Inhalt des Frachtcontainers an sich zu nehmen (und beispielsweise weiterzuverkaufen oder weiterzuverarbeiten). Im Gegensatz dazu sollen der oder die Transporteure den Frachtcontainer lediglich weiter transportieren, nicht aber den Inhalt des Frachtcontainers an sich nehmen dürfen.

Der Frachtbrief wird im Stand der Technik als Papierdokument ausgefertigt. Um zu verhindern, dass Transporteure unbefugt den Inhalt des Frachtcontainers an sich nehmen, erhalten diese für den Transport lediglich eine Kopie des Frachtbriefs ausgehändigt. Jeder Transporteur benötigt ein weiteres Dokument, dass ihn als Berechtigten zum Weitertransport des Frachtcontainers ausweist.

Das Original des Frachtbriefs wird nach dessen Erstellung meist bei einer Bank hinterlegt, welche als Mittelsmann zwischen Versender und Empfänger fungiert. Wenn der Empfänger den Frachtcontainer erhalten und überprüft hat, bezahlt er typischerweise den vereinbarten Kaufpreis an die Bank. Daraufhin händigt die Bank den Frachtbrief an den Empfänger aus und gibt den Kaufpreis an den Versender weiter. Dieses Verfahren ist recht zeitaufwendig, und verursacht erhebliche Kosten für die Beteiligung der Bank.

Es ist auch bekannt, das Original des Frachtbriefs zusammen mit dem Frachtcontainer zu versenden. Dies birgt jedoch grundsätzlich die Gefahr eines unbefugten Zugriffs auf den Frachtbrief. Insbesondere wäre eine Weiterveräußerung des Frachtcontainers bzw. seines Inhalts mithilfe des unbefugt angeeigneten Frachtbriefs erleichtert. Die Transporteure sollten daher den Frachtbrief besonders sichern, was erhebliche Kosten mit sich bringen kann. Zudem müssen die Transporteure ermächtigt werden, den Frachtbrief weiter zu transportieren, wofür typischerweise eine weitere Ermächtigung eingeholt werden muss, typischerweise verbunden mit einem weiteren, separaten Legitimationsdokument.

Insgesamt ist daher die Handhabung eines Frachtcontainers beim Transport in Hinblick auf den Frachtbrief recht aufwändig, insbesondere zeit- und kostenaufwändig.

### Aufgabe der Erfindung

Der Erfindung liegt die Aufgabe zugrunde, den Warenaustausch mittels Frachtcontainern zu vereinfachen, insbesondere zu beschleunigen und zu verbilligen.

### Kurze Beschreibung der Erfindung

Diese Aufgabe wird gelöst durch ein Verfahren zur Handhabung eines Frachtcontainers, der von einem Versender über einen oder mehrere Transporteure an einen Empfänger verbracht wird,
mit folgenden Schritten:
a) Ein Versender stellt einen Frachtcontainer bereit, und ein Transportplan für den Frachtcontainer wird erstellt und auf einem zentralen Verwaltungsserver hinterlegt, wobei der Transportplan zumindest den Versender, einen oder mehrere Transporteure und einen Empfänger des Frachtcontainers enthält;
b) Mit einem gesicherten Erzeugermodul wird ein verschlüsselter elektronischer Frachtbrief erstellt, wobei der verschlüsselte elektronische Frachtbrief nur durch eine gemeinsame Anwendung eines ersten Schlüssels und eines zweiten Schlüssels vollständig entschlüsselbar ist, und wobei Teile des verschlüsselten elektronischen Frachtbriefs ohne die beiden Schlüssel entschlüsselbar sind;
c) Der verschlüsselte elektronische Frachtbrief wird an einen zentralen Sicherungsserver übermittelt und auf diesem gespeichert, und der erste Schlüssel wird an den Versender des Frachtcontainers übermittelt, und der zweite Schlüssel wird an den Empfänger des Frachtcontainers übermittelt;
d) Der Frachtcontainer wird über einen oder mehrere Transporteure zum Empfänger verbracht, wobei
   - ein jeder Transporteur sich beim zentralen Verwaltungsserver authentifiziert und einen entschlüsselten Teil des Frachtbriefs des Frachtcontainers vom zentralen Sicherungsserver anfordert;
   - und wenn eine Überprüfung des zentralen Verwaltungsservers ergibt, dass der Transporteur im hinterlegten Transportplan des Frachtcontainers vorgesehen ist, wird ein entschlüsselter Teil des Frachtbriefs an den Transporteur übermittelt, mit dem der Transporteur seine Berechtigung zum Weitertransport des Frachtcontainers nachweisen kann;
e) Der Empfänger überprüft den Frachtcontainer, und wenn der Empfänger den Frachtcontainer akzeptieren will, authentifiziert sich der Empfänger beim zentralen Verwaltungsserver und übermittelt den zweiten Schlüssel an den zentralen Sicherungsserver;
f) Wenn der Versender den Frachtcontainer für den Empfänger freigeben will, authentifiziert sich der Versender beim zentralen Verwaltungsserver und übermittelt den ersten Schlüssel an den zentralen Sicherungsserver;
g) Wenn der zweite Schlüssel in Schritt e) und der erste Schlüssel in Schritt f) an den zentralen Sicherungsserver übermittelt wurden, wird mit diesen der auf dem zentralen Sicherungsserver gespeicherte verschlüsselte elektronische Frachtbrief vollständig entschlüsselt, und der vollständig entschlüsselte elektronische Frachtbrief wird an den Empfänger des Frachtcontainers übermittelt, mit dem der Empfänger seine Berechtigung nachweisen kann, den Inhalt des Frachtcontainers an sich zu nehmen.

Im Rahmen der vorliegenden Erfindung wird die Dokumentenverwaltung für den Transport bzw. während des Transports eines Frachtcontainers vereinfacht. Insbesondere wird dabei der Frachtbrief, mit dem dessen Inhaber sich dazu legitimieren kann, den Inhalt des Frachtcontainers an sich zu nehmen bzw. zu verwerten, als ein elektronischer Frachtbrief gehandhabt.

Dadurch ist es möglich, die Dokumentenverwaltung weitgehend zu digitalisieren und elektronisch über Datenleitungen auf den Frachtbrief zuzugreifen. Durch den elektronischen Zugriff auf den elektronischen Frachtbrief werden Abläufe beschleunigt und vereinfacht. Die Ausfertigung, Versendung und Übergabe, und auch die Bewachung von Papierdokumenten kann weitgehend entfallen.

Durch erfindungsgemäße Verschlüsselungsmaßnahmen am elektronischen Frachtbrief kann die Sicherheit des Warenaustauschs erhöht werden, und auch im Ablauf der Dokumentenhandhabung und Frachtcontainerhandhabung kann eine Vereinfachung erreicht werden.

Im Rahmen der Erfindung wird eine originäre, (wenigstens) zweiseitige elektronische Verschlüsselung des Frachtbriefs eingesetzt, durch die ein vorzeitiger, unbefugter Zugriff auf den Frachtbrief vermieden wird. Andererseits wird durch die Verteilung der beiden Schlüssel auf den Versender und den Empfänger es ermöglicht, dass der Versender und der Empfänger die Entschlüsselung des Frachtbriefes und damit die Freigabe des Frachtcontainers an den Empfänger im Wesentlichen selbst betreiben können. Insbesondere ist die Zwischenlagerung eines Original-Frachtbriefs bei einer Bank und eine Auslieferung des Original-Frachtbriefs durch die Bank nicht mehr nötig.

Der elektronische Frachtbrief wird zunächst mit einem gesicherten Erzeugermodul in verschlüsselter Form erzeugt; ebenso werden damit der erste und der zweite Schlüssel erstellt, die für die vollständige Entschlüsselung des verschlüsselten elektronischen Frachtbriefs notwendig sind. Auf dem Erzeugermodul ist dazu eine entsprechende Hardware verbaut und Software hinterlegt. Das gesicherte Erzeugermodul ist durch geeignete Maßnahmen vor Manipulationen geschützt. Typische Sicherungsmaßnahmen umfassen ein vollständig geschlossenes, insbesondere gepanzertes Gehäuse, mechanische oder elektronische Schlösser an Gehäusezugängen und automatische Selbstzerstörungs- oder Löschmechanismen bei Erkennen von unbefugten Manipulationen; softwareseitig sind meist mehrstufige Passwortsicherungen und die Einrichtung von verschlüsselten Datenübertragungsverbindungen vorgesehen.

Der verschlüsselte elektronische Frachtbrief wird am zentralen Sicherungsserver hinterlegt; dieser kann falls erforderlich auch eine Sicherungskopie vorhalten; ansonsten findet jedoch üblicherweise keine weitere Speicherung des verschlüsselten elektronischen Frachtbriefs statt. Der zentrale Sicherungsserver (der auch als "secured safe" bezeichnet wird) wird typischerweise in einem nicht öffentlich zugänglichen, bewachten Gebäude betrieben und ist softwareseitig vor unbefugtem Zugriff durch geeignete Maßnahmen, insbesondere Firewalls und Passwortkontrollen, geschützt. Der erste Schlüssel wird an den Versender übermittelt, typischerweise unter Vermittlung des zentralen Verwaltungsservers, der Informationen über den Versender im Transportplan hat, und vom Versender gespeichert; ansonsten findet üblicherweise keine weitere Speicherung des ersten Schlüssels statt. Ebenso wird der zweite Schlüssel an den Empfänger übermittelt, typischerweise unter Vermittlung des zentralen Verwaltungsservers, der Informationen über den Empfänger im Transportplan hat, und vom Empfänger gespeichert; ansonsten findet üblicherweise keine weitere Speicherung des zweiten Schlüssels statt.

Um die Abwicklung des Transports zu vereinfachen, können erfindungsgemäß Teile des Frachtbriefs ohne Entschlüsselung angefordert bzw. ausgelesen werden, insbesondere solche Teile, die zur Legitimierung der Transporteure nötig sind. Ein Transporteur, der einen Teil des Frachtbriefs für seine Legitimation benötigt, braucht sich lediglich beim zentralen Verwaltungsserver über eine Datenverbindung zu authentifizieren und erhält sodann (wenn er im Transportplan mit dieser Rolle aufgeführt ist) über die Datenverbindung eine entsprechende Datei übermittelt, die er an einem Endgerät anzeigen und/oder nötigenfalls auch ausdrucken kann. Eine Übergabe oder Zusendung von Papierdokumenten an den Transporteur ist nicht nötig. In ähnlicher Weise können auch Inspekteure (etwa die Zollbehörde eines Landes, in welchem der Frachtcontainer transportiert wird), Zugriff auf Teile des Frachtbriefs erhalten. Ein Zugriff auf den vollständigen Frachtbrief, der zur Aneignung des Frachtcontainerinhalts berechtigen würde, ist jedoch ohne die beiden Schlüssel nicht möglich.

Wenn der Frachtcontainer schließlich beim (im Transportplan bzw. Frachtbrief vorgesehenen) Empfänger angekommen ist, kann dieser den Zustand des Frachtcontainers bzw. dessen Inhalts überprüfen, etwa auf Vollständigkeit der ihm vorliegenden Ware und ordnungsgemäße Beschaffenheit der Ware. Nötigenfalls kann der Empfänger (ähnlich wie ein Transporteur) unter seiner Authentifizierung beim zentralen Verwaltungsserver zunächst einen unverschlüsselten Teil des Frachtbriefs anfordern, um sich für diese Überprüfung des Inhalts des Frachtcontainers zu legitimieren. Will der Empfänger den Frachtcontainer bzw. die enthaltene Ware akzeptieren, übermittelt er seinen zweiten Schlüssel an den zentralen Sicherungsserver. Typischerweise zahlt der Empfänger dann auch einen vereinbarten Kaufpreis (typischerweise an den Versender direkt, oder, falls zur Sicherheit gewünscht, an einen Treuhänder). Sodann ist der Versender am Zug. Will dieser den Inhalt des Frachtcontainers für den Empfänger freigeben, typischerweise wenn ihm eine Bestätigung vorliegt, dass der Kaufpreis gezahlt wurde (an ihn selbst oder an den Treuhänder), übermittelt auch er seinen ersten Schlüssel an den zentralen Sicherungsserver. Sodann ist der zentrale Sicherungsserver in der Lage, den verschlüsselten elektronischen Frachtbrief zu entschlüsseln und dem Empfänger über eine Datenleitung zu übermitteln. Als Inhaber des vollständig entschlüsselten Frachtbriefs, den der Empfänger typischerweise ausdruckt, ist der Empfänger dann legitimiert, die Waren aus dem Frachtcontainer zu verwerten, und insbesondere aus dem Frachtcontainer zu entfernen und weiterzuverkaufen oder weiterzuverarbeiten.

### Bevorzugte Varianten der Erfindung

Bei einer bevorzugten Variante des erfindungsgemäßen Verfahrens ist vorgesehen, dass das gesicherte Erzeugermodul den elektronischen Frachtbrief bei seiner Erzeugung authentifiziert, eindeutig kennzeichnet und verschlüsselt. Im Rahmen der Authentifizierung wird eine Information in den Frachtbrief eingefügt, mit dem die Echtheit des Frachtbriefs bestätigt (oder falsifiziert) werden kann, etwa als ein alphanumerischer Authentifizierungscode, der bestimmten (geheimen) Zusammenstellungsprinzipien gehorcht. Die eindeutige Kennzeichnung kann ebenfalls durch einen alphanumerischen Code erfolgen, meist enthält dieser eine durchzählende Komponente und einen Komponente, die das erstellende gesicherte Erzeugermodul identifiziert. Durch die Verschlüsselung wird der Inhalt des Frachtbriefs zumindest teilweise verborgen (unkenntlich), typischerweise mittels einer mathematischen Umrechnung der zugrunde liegenden Daten unter Verwendung der beiden Schlüssel. Die angegebenen Maßnahmen erhöhen die Sicherheit bei der Verwendung des elektronischen Frachtbriefs.

Ebenfalls bevorzugt ist eine Variante, bei der der jeweilige Transporteur in Schritt d) zusätzlich zu dem Teil des Frachtbriefs auch einen Teil des hinterlegten Transportplans übermittelt bekommt, insbesondere Informationen über einen vorherigen Transporteur und/oder einen nächsten Transporteur und/oder Übergabezeiten und/oder Übergabeorte. Durch den (teilweisen) Zugriff auf den Transportplan kann die Handhabung des Frachtcontainers für den Transporteur erleichtert werden oder auch die Sicherheit erhöht werden. So kann der Transporteur aus sicherer Quelle feststellen, ob er den Frachtcontainer vom richtigen Vor-Transporteur erhält und an den richtigen Nach-Transporteur übergibt. Über den zentral gespeicherten Transportplan kann auch leicht eine Aktualisierung der Daten erfolgen, etwa bei Transportverzögerungen.

Besonders vorteilhaft ist eine Variante, bei der der verschlüsselte elektronische Frachtbrief nach seiner Übermittlung an den zentralen Sicherungsserver in Schritt c) vom gesicherten Erzeugermodul entfernt wird. Der verschlüsselte elektronische Frachtbrief ist dann nur noch auf dem zentralen Sicherungsserver gespeichert. Dadurch ist der (verschlüsselte) Frachtbrief besonders sicher, insbesondere wird die Gefahr eines unbefugten Zugriffs auf den (verschlüsselten) Frachtbrief am gesicherten Erzeugermodul minimiert. Das Entfernen (Löschen) kann unmittelbar nach der erfolgreichen Übermittlung an den zentralen Sicherungsserver erfolgen.

Ebenfalls besonders vorteilhaft ist eine Variante, bei der der erste und zweite Schlüssel nach ihrer Übermittlung in Schritt c) vom gesicherten Erzeugermodul und ggf. vom zentralen Verwaltungsserver entfernt werden. Der erste Schlüssel ist dann nur noch beim Versender, und der zweite Schlüssel nur noch beim Empfänger des Frachtcontainers gespeichert. Auch dadurch wird der (verschlüsselte) Frachtbrief besonders sicher; insbesondere wird die Gefahr eines unbefugten Zugriffs auf die Schlüssel am gesicherten Erzeugermodul oder am zentralen Verwaltungsserver minimiert. Das Entfernen (Löschen) kann unmittelbar nach der erfolgreichen Übermittlung an den Versender und Empfänger erfolgen. Eine Löschung der Schlüssel vom zentralen Verwaltungsserver erfolgt dann, wenn in Schritt c) der erste und zweite Schlüssel vom gesicherten Erzeugermodul zunächst an den zentralen Verwaltungsserver übermittelt werden, und dann der erste Schlüssel über den zentralen Verwaltungsserver an den Versender übermittelt wird, und der zweite Schlüssel über den zentralen Verwaltungsserver an den Empfänger übermittelt wird.

Vorteilhaft ist weiterhin eine Variante, bei der der elektronische Frachtbrief nach seiner vollständigen Entschlüsselung und Übermittlung an den Empfänger in Schritt g) vom zentralen Sicherungsserver gelöscht wird. Der elektronische Frachtbrief ist dann nur noch beim Empfänger verfügbar. Dadurch wird die Gefahr eines unbefugten, abermaligen Zugriffs auf den (verschlüsselten oder entschlüsselten) Frachtbrief auf dem zentralen Sicherungsserver minimiert. Das Löschen kann unmittelbar nach der erfolgreichen Übermittlung des entschlüsselten Frachtbriefs an den Empfänger erfolgen.

Bei einer bevorzugten Variante bekommt das gesicherte Erzeugermodul für die Erstellung des verschlüsselten elektronischen Frachtbriefs Informationen aus dem auf dem zentralen Verwaltungsserver hinterlegten Transportplan übermittelt. Soweit Informationen vom zentralen Verwaltungsserver über eine Datenleitung am gesicherten Erzeugermodul zur Verfügung gestellt werden können, brauchen diese nicht anderweitig ermittelt und eingegeben (etwa manuell eingegeben) zu werden. Zugleich werden Inkonsistenzen zwischen Frachtbrief und Transportplan vermieden.

Besonders bevorzugt ist eine Variante, die vorsieht,
dass der hinterlegte Transportplan des Frachtcontainers oder der zentrale Verwaltungsserver für eine Vielzahl von Transportplänen, darunter den hinterlegten Transportplan des Frachtcontainers, wenigstens einen Inspekteur enthält,
dass während Schritt d) sich ein Inspekteur beim zentralen Verwaltungsserver authentifiziert und einen entschlüsselten Teil des Frachtbriefs anfordert,
und dass wenn eine Überprüfung des zentralen Verwaltungsservers ergibt, dass der Inspekteur im hinterlegten Transportplan des Frachtcontainers oder im zentralen Verwaltungsserver für eine Vielzahl von Transportplänen, darunter den hinterlegten Transportplan des Frachtcontainers, vorgesehen ist, ein entschlüsselter Teil des Frachtbriefs an den Inspekteur übermittelt wird. Durch den in dieser Variante eingerichteten elektronischen Zugriff für einen Inspekteur, etwa eine Zollbehörde, können Kontrollen vereinfacht und beschleunigt werden. Insbesondere müssen keine Papierdokumente für den Inspekteur bereitgehalten und an diesen übergeben werden. Weiterhin kann ein Kontrollprozess, etwa für die Zollabwicklung, begonnen werden, bevor ein Transporteur des Frachtcontainers mit Papierdokumenten beim Inspekteur eintrifft.

In einer bevorzugten Weiterbildung dieser Variante ist vorgesehen,
dass nach der Übermittlung des entschlüsselten Teils an den Inspekteur sodann der bisherige elektronische Frachtbrief für den Frachtcontainer gelöscht wird und für das weitere Verfahren durch einen neuen elektronischen Frachtbrief für den Frachtcontainer ersetzt wird, der auf dem zentralen Sicherungsserver verschlüsselt gespeichert wird, wobei für den neuen verschlüsselten elektronischen Frachtbrief ein neuer erster Schlüssel an den Versender und ein neuer zweiter Schlüssel an den Empfänger übermittelt werden. Der Inspekteur ist typischerweise eine Zollbehörde, die typischerweise sehr viele Informationen aus dem Frachtbrief benötigt. Danach kann die Sicherheit des Frachtcontainertransports durch Erzeugung eines neuen Frachtbriefs verbessert werden. Ebenso kann der Inspekteur vor der Erstellung des neuen (verschlüsselten) Frachtbriefs Informationen an den zentralen Verwaltungsserver und/oder den zentralen Sicherungsserver übermitteln, die in den neu zu erstellenden Frachtbrief eingehen, etwa das Ergebnis einer Überprüfung des Frachtcontainers durch den Inspekteur. Für diese Variante wird typischerweise ein zentrales gesichertes Erzeugermodul vorgehalten.

Bevorzugt ist auch eine Variante, bei der das gesicherte Erzeugermodul von einem ersten Transporteur betrieben wird, der vom Versender den bereitgestellten Frachtcontainer erhält. Typischerweise nehmen erste Transporteure kontinuierlich eine besonders große Anzahl von Frachtcontainern (beispielsweise mehr als 100 Stück täglich) entgegen, so dass sich die Anschaffungs- und Betriebskosten eines gesicherten Erzeugermoduls auf viele einzelne Transportvorgänge verteilen lassen und dadurch für den einzelnen Transportvorgang gering bleiben. Mit der Übernahme durch den ersten Transporteur besteht zudem erstmals die Notwendigkeit, einen Frachtbrief zu erstellen, so dass die Einrichtung des gesicherten Erzeugermoduls hier eine unnötige Voraushandhabung eines Frachtbriefs vermeidet.

Bei einer vorteilhaften Variante ist auf dem Frachtcontainer ein Identifikationscode angebracht, insbesondere in Form von vier Buchstaben und sieben Ziffern, und der hinterlegte Transportplan des Frachtcontainers und der elektronische Frachtbrief enthalten den Identifikationscode. Dies vereinfacht die Zuordnung des elektronischen Frachtbriefs zum Frachtcontainer.

Vorteilhaft ist auch eine Variante, bei der der elektronische Frachtbrief nach der vollständigen Entschlüsselung ausdruckbar ist, nicht jedoch der verschlüsselte elektronische Frachtbrief, insbesondere wobei der elektronische Frachtbrief nach seiner vollständigen Entschlüsselung und Übermittlung an den Empfänger gemäß Schritt g) vom Empfänger ausgedruckt wird. Dadurch wird einem Missbrauch des (verschlüsselten) elektronischen Frachtbriefs vorgebeugt. Mit dem ausgedruckten, vollständig entschlüsselten Frachtbrief kann hingegen der Empfänger den Frachtcontainer bzw. dessen Inhalt in üblicher Weise verwerten. Zur Verbesserung der Sicherheit kann der vollständig entschlüsselte elektronische Frachtbrief nach einmaligem Ausdrucken auf einem Drucker des Empfängers beim Empfänger automatisch gelöscht werden.

Bei einer bevorzugten Variante ist weiterhin vorgesehen, dass in Schritt f) der Versender überprüft, ob er eine festgelegte Zahlung für den Frachtcontainer erhalten hat, und der Versender den Frachtcontainer für den Empfänger freigibt, wenn die festgelegte Zahlung bei ihm eingegangen ist,
insbesondere wobei ein Endgerät des Versenders so eingerichtet ist, dass der erste Schlüssel automatisch vom Endgerät an den zentralen Sicherungsserver übermittelt wird, wenn das Endgerät den Eingang der festgelegten Zahlung beim Versender automatisch festgestellt hat. Die festgelegte Zahlung ist typischerweise eine Geldzahlung (etwa ein Kaufpreis), kann im Einzelfall aber auch eine Art von Zahlung, etwa in Form von Waren, umfassen. Durch diese Variante kann der Versender vor Betrug oder Zahlungsausfall geschützt werden. Durch eine automatische Feststellung des Zahlungseingangs und automatische Übermittlung des ersten Schlüssels mit dem Endgerät des Versenders kann wiederum der Empfänger vor Betrug geschützt werden.

Bevorzugt ist eine Variante, bei der der eine oder die mehreren Transporteure den Frachtcontainer per Schiff und/oder per Eisenbahn und/oder per LKW und/oder per Flugzeug transportieren. Durch diese Transportwege können große Mengen an Frachtcontainern transportiert wegen. Bevorzugt erfolgt zumindest ein Transportschritt des Frachtcontainers im Rahmen der Erfindung per Schiff.

Besonders bevorzugt ist eine Variante, bei der der Versender und der Empfänger des Frachtcontainers sowie der eine oder die mehreren Transporteure und ggf. der wenigstens eine Inspekteur mit Endgeräten, insbesondere PCs, Tablets oder Smartphones, mit dem zentralen Verwaltungsserver und/oder dem zentralen Sicherungsserver elektronisch kommunizieren, und dass weiterhin das gesicherte Erzeugermodul mit dem zentralen Verwaltungsserver und/oder dem zentralen Sicherungsserver elektronisch kommuniziert. Die elektronische Kommunikation erfolgt typischerweise über eine Datenleitung, die internetbasiert oder mobilfunkbasiert ist. Typischerweise erfolgt die gesamte Kommunikation zwischen dem Versender, Empfänger, dem oder den Transporteuren und dem wenigstens einen Inspekteur einerseits, und dem zentralen Verwaltungsserver und/oder zentralen Sicherungsserver andererseits elektronisch.

In den Rahmen der vorliegenden Erfindung fällt auch ein Computersystem für die Durchführung eines erfindungsgemäßen, oben beschriebenen Verfahrens zur Handhabung einer Vielzahl von Frachtcontainern, umfassend
- einen zentralen Sicherungsserver und einen zentralen Verwaltungsserver,
- eine Vielzahl von gesicherten Erzeugermodulen, die mit dem zentralen Sicherungsserver und/oder dem zentralen Verwaltungsserver elektronisch kommunizieren können;
- eine Vielzahl von Endgeräten, insbesondere PCs, Tablets oder Smartphones, die mit dem zentralen Sicherungsserver und/oder dem zentralen Verwaltungsserver elektronisch kommunizieren können, und die jeweils einem Versender oder einem Empfänger oder einem Transporteur oder ggf. einem Inspekteur zugeordnet sind. Das Computersystem kann insbesondere in einem obigen erfindungsgemäßen Verfahren verwendet werden. Die elektronische Kommunikation erfolgt typischerweise über das Internet und/oder ein Mobilfunknetz. Mit dem erfindungsgemäßen Computersystem kann der Warenaustausch mittels Frachtcontainern vereinfacht und beschleunigt werden. Insbesondere kann mit dem Computersystem die Dokumentenhandhabung und Kommunikation organsiert werden. Auf den Endgeräten sind typischerweise spezielle Software-Applikationen (Apps) für die Kommunikation mit dem zentralen Sicherungsserver und/oder dem zentralen Verwaltungsserver installiert.

Bevorzugt ist eine Ausführungsform des erfindungsgemäßen Computersystems, bei dem die gesicherten Erzeugermodule versiegelt sind, insbesondere wobei eine Harzversiegelung ein Öffnen eines Gehäuses eines jeweiligen gesicherten Erzeugermoduls verunmöglicht. Dadurch werden Manipulationen am gesicherten Erzeugermodul erschwert bzw. leichter aufdeckbar.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:

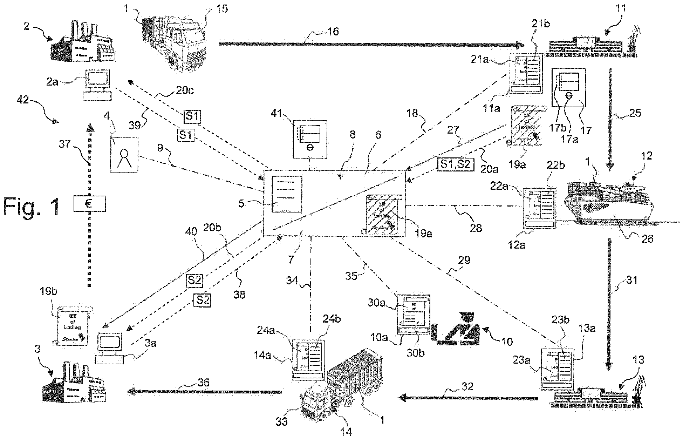

- Fig. 1: eine Schemadarstellung einer Variante des erfindungsgemäßen Verfahrens.

Die **Fig. 1** zeigt in einer beispielhaften Variante das erfindungsgemäße Verfahren zur Handhabung eines Frachtcontainers 1. Ein Versender 2, hier eine Firma, die Waren (beispielsweise Getriebeteile, nicht dargestellt) herstellt, möchte einige hergestellte Waren in dem Frachtcontainer 1 zu einem Empfänger 3 verbringen, hier eine Firma, die die Waren weiterverarbeitet (beispielsweise die Getriebeteile in Autos einbaut, und die Autos dann verkauft). Versender 2 und Empfänger 3 haben einen Kaufvertrag geschlossen, wonach der Versender 2 die Waren bzw. den Frachtcontainer 1 zum Sitz des Empfängers 3 zu liefern hat, der dann die Ware überprüft und (bei ordnungsgemäßer Ware) den vereinbarten Kaufpreis an den Versender 2 bezahlt. Sobald die Ware bezahlt ist, soll das Eigentum an den Waren, also dem Inhalt des Frachtcontainers 1, auf den Empfänger 3 übergehen.

Der Versender 2 hat in der darstellten Verfahrensvariante einem Frachtplaner 4 (engl. forward carrier) die Planung des Versands des Frachtcontainers 1 übertragen. Dieser legt fest, über welche Route der Frachtcontainer 1 vom Versender 2 zum Empfänger 3 verbracht werden soll, und insbesondere welche weiteren Personen/Einrichtungen daran beteiligt werden sollen. Der Frachtplaner 4 erstellt einen Transportplan 5, der an einen zentralen Verwaltungsserver 6 elektronisch übermittelt und dort hinterlegt wird 9.

Der zentrale Verwaltungsserver 6 gehört zusammen mit einem zentralen Sicherungsserver 7 zu einem zentralen Serversystem 8, das für eine Vielzahl von (insbesondere gleichzeitig stattfindenden) Frachtcontainertransporten zuständig ist. Für den Transport des hier betrachteten Frachtcontainers 1 steht das zentrale Serversystem 8 mit dem Versender 2, dem Empfänger 3, hier einem Inspekteur 10 und hier vier Transporteuren 11, 12, 13, 14 in elektronischer Kommunikationsverbindung, hier über das Internet. Der Versender 2 verfügt hier als Endgerät 2a über eine PC (Personalcomputer), ebenso verfügt der Empfänger 3 hier als Endgerät 3a über einen PC. Der Inspekteur 10 und die Transporteure 11-14 verfügen hier als Endgeräte 10a-14a über Tablets. Der erste Transporteur 11 verfügt hier außerdem über ein gesichertes Erzeugermodul 17. Zusätzlich verfügt hier auch das zentrale Serversystem 8 über ein zentrales gesichertes Erzeugermodul 41. Der zentrale Verwaltungsserver 6, der zentrale Sicherungsserver 7, das zentrale gesicherte Erzeugermodul 41, sowie die Endgeräte 2a, 3a, 10a-14a und gesicherte Erzeugermodule 17 für alle Frachtcontainertransporte bilden ein erfindungsgemäßes Computersystem 42 zur Durchführung des erfindungsgemäßen Verfahrens.

Der hinterlegte Transportplan 5 umfasst Informationen (etwa Name, Anschrift, Emailadresse) über die vorgesehenen Transporteure 11-14, den Versender 2 und den Empfänger 3 und einen vorgesehenen Inspekteur 10, und hier weiterhin Übergabezeitpunkte und Übergabeorte für den Frachtcontainer 1, sowie transportrelevante Eigenschaften der transportierten Waren, etwa zu Art und Menge, ggf. auch Verderblichkeit oder Gefahrgutcharakter.

Die Planung des Frachtplaners 4 sieht vor, dass der Versender 2 den Frachtcontainer 1 an einen ersten Transporteur 11, hier einen Hafenbetreiber, übergibt. Der Frachtcontainer 1 wird dazu beim Versender 2 mit den Waren beladen und auf einen LKW (Lastkraftwagen) 15 geladen und zum ersten Transporteur 11 verbracht 16 (man beachte, das durchgezogene, fette Pfeile für einen Transport des Frachtcontainers 1 stehen). Der LKW 15 kann dabei zum Fuhrpark des Versenders 2 gehören, oder auch zu einer vertrauenswürdigen Spedition, die für die Bereitstellung des Frachtcontainers 1 beim ersten Transporteur 11 beauftragt wurde (Man beachte, dass für diesen Vorabtransport noch kein formeller Frachtbrief existiert).

Der erste Transporteur 11 fertigt sodann mittels des gesicherten Erzeugermoduls 17 einen verschlüsselten Frachtbrief 19a (engl. bill of lading) an (die Schraffur deutet die Verschlüsselung an). Die erforderlichen Informationen für den Frachtbrief können beim zentralen Verwaltungsserver 6, nach geeigneter Authentifizierung des ersten Transporteurs 11 bzw. dessen gesicherten Erzeugermoduls 17, aus dem Transportplan 5 erhalten werden. Alternativ oder zusätzlich können auch Informationen, die der Versender 2 dem ersten Transporteur 11 bzw. dessen gesichertem Erzeugermodul 17 direkt zur Verfügung stellt, genutzt werden (nicht näher dargestellt). Der Frachtbrief enthält zumindest Informationen über die am Frachtcontainertransport beteiligten Transporteure 11-14, ggf. einen oder mehrere Inspektoren 10, den Versender 2 und den Empfänger 3. Typischerweise enthält der Frachtbrief weiterhin einen Individualisierungscode, ein Authentifizierungsmerkmal (etwa ein Siegel oder einen Code) und auch eine Frachtcontainernummer, so wie sie außen am Frachtcontainer 1 aufgebracht (meist aufgedruckt) ist. Das gesicherte Erzeugermodul 17 weist hier ein geschlossenes Gehäuse auf und ist mit einem Schloss 17a gesichert und weist ein Siegel 17b auf, so dass jede unbefugte Manipulation leicht erkannt werden kann.

Der verschlüsselte Frachtbrief 19a wird an das zentrale Sicherungsmodul 7 übermittelt 27 (vgl. dünner durchgezogener Pfeil) und dort gespeichert; auf dem gesicherten Erzeugermodul 17 verbleibt hingegen nach der Übermittlung keine Kopie mehr. Das gesicherte Erzeugermodul 17 erzeugt zudem zwei Schlüssel S1, S2, durch deren gemeinsame Anwendung der verschlüsselte Frachtbrief 19a entschlüsselt werden kann. Diese werden unter Vermittlung des zentralen Verwaltungsservers 6 an den Versender 2 und den Empfänger 3 übertragen, vgl. Übermittlungen 20a, 20b, 20c (die gestrichelten Pfeile deuten jeweils Schlüsselübermittlungen an). Der Versender 2 speichert den ersten Schlüssel S1, und der Empfänger 3 speichert den zweiten Schlüssel S2; auf dem gesicherten Erzeugermodul 17 und dem zentralen Servermodul 8 verbleiben hingegen nach der Übermittlung keine Kopien mehr. Ohne die Schlüssel S1, S2 ist eine Entschlüsselung von Teilen des Frachtbriefs 19a möglich, nicht jedoch die vollständige Entschlüsselung.

Vorliegend fordert der erste Transporteur 11 vom zentralen Serversystem 8 einen entschlüsselten Teil 21a des Frachtbriefs 19a an 18, um sich für den weiteren Frachtcontainertransport legitimieren zu können. Da der erste Transporteur 11 im Transportplan 5 bekannt und vorgesehen ist, erhält er (nach Authentifizierung beim zentralen Verwaltungsserver 6) den angeforderten Teil 21a vom zentralen Sicherungsserver 7 bzw. vom zentralen Serversystem 8 auf sein Endgerät 11a übermittelt. Zusammen mit dem entschlüsselten Teil 21a des Frachtbriefs 19a können auch Teile (weitere Informationen) 21b aus dem Transportplan 5 übermittelt werden, etwa Übergabezeitpunkt und Übergabeort des Frachtcontainers 1 an den zweiten Transporteur 12.

Sodann erfolgt der Transport 25 des Frachtcontainers 1 vom ersten Transporteur 11 weiter zum zweiten Transporteur 12. Der zweite Transporteur 12, hier eine Reederei mit einem Schiff 26, auf das der Frachtcontainer 1 verladen wurde, authentifiziert sich beim zentralen Verwaltungsserver 6 und fordert für sich einen entschlüsselten Teil 22a des Frachtbriefs 19a an 28, um sich für den weiteren Frachtcontainertransport legitimieren zu können, sowie Teile (weitere Informationen) 22b aus dem Transportplan 5. Man beachte, dass diese Anforderung typischerweise zeitlich bereits etwas vor der Übergabe des Frachtcontainers 1 an den zweiten Transporteur 12 erfolgt.

In analoger Weise wird dann der Frachtcontainer 1 vom zweiten Transporteur 12 weiter zum dritten Transporteur 13 transportiert 31, wobei der dritte Transporteur 13 hier wiederum ein Hafen ist. Auch der dritte Transporteur 13 authentifiziert sich und fordert einen entschlüsselten Teil 23a des Frachtbriefs 19a an 29.

In der gezeigten Variante findet nun eine behördliche Kontrolle des Frachtcontainers 1 durch den Inspekteur 10 statt, hier die Zollbehörde des Landes, in welchem sich der Hafen befindet. Dieser authentifiziert sich beim zentralen Verwaltungsserver 8 und fordert einen unverschlüsselten Teil 30a des verschlüsselten Frachtbriefs 19a an 35. Man beachte, dass der Teil 30a vor allem Informationen über etwaige behördliche Genehmigungen und die Fracht selbst enthält, sowie Informationen über Versender und Empfänger. Zusätzlich werden auch hier Teile (weitere Informationen) 30b aus dem Transportplan 5 übermittelt. Falls erforderlich, kann im Rahmen oder nach der Kontrolle der bisherige verschlüsselte Frachtbrief 19a durch einen neuen verschlüsselten Frachtbrief (nicht dargestellt) ersetzt werden, der mittels eines zentralen gesicherten Erzeugermoduls 41, das lokal am zentralen Serversystem 8 angeschlossen ist, erstellt wird. Auch die bisherigen Schlüssel S2, S2 müssen dann durch neue Schlüssel ersetzt und an den Versender 2 und den Empfänger 3 übermittelt werden (nicht dargestellt). Der neue verschlüsselte Frachtbrief kann insbesondere auch Informationen über das Ergebnis der Kontrolle enthalten. Man beachte, dass die Kontrolle prinzipiell bereits unmittelbar nach der Übermittlung des verschlüsselten Frachtbriefs 19a an den zentralen Sicherungsserver 7 erfolgen kann. Insbesondere braucht der Inspekteur nicht das Eintreffen eines Transporteurs abzuwarten.

Sofern die Kontrolle erfolgreich absolviert wird, kann dann ein Transport 32 des Frachtcontainers 1 zum vierten (und hier letzten) Transporteur 14 erfolgen. Dieser ist hier wiederum eine Spedition, die den Frachtcontainer 1 auf einem LKW 33 verlädt. Auch der vierte Transporteur 14 authentifiziert sich und fordert einen entschlüsselten Teil 24a des Frachtbriefs 19a (und auch Teile 24b aus dem Transportplan 5) an 34.

Der vierte Transporteur 14 bringt schließlich den Frachtcontainer 1 zum Empfänger 3. Dieser kann sich zunächst beim zentralen Serversystem 8 authentifizieren und einen entschlüsselten Teil 24a des Frachtbriefs 19a anfordern, insbesondere falls der vierte Transporteur 14 für die Aushändigung des Frachtcontainers 1 an den Empfänger 3 eine solche Legitimation verlangen sollte (nicht näher dargestellt).

Sodann überprüft der Empfänger 3 den erhaltenen Frachtcontainer 1, insbesondere ob die enthaltene Ware vollständig und in ordnungsgemäßem Zustand ist. Falls er den Frachtcontainer 1 bzw. die Ware akzeptieren will, bezahlt der Empfänger 3 an den Versender 2 den vereinbarten Kaufpreis 37, hier durch Überweisung an ein vom Versender 2 bestimmtes Bankkonto. Ebenso authentifiziert sich der Empfänger 3 beim zentralen Verwaltungsserver 6 und übermittelt seinen zweiten Schlüssel S2 an den zentralen Sicherungsserver 7, vgl. Übermittlung 38.

Der Versender 2 überwacht den Eingang des Kaufpreises auf seinem Bankkonto. Sobald der vereinbarte Kaufpreis eingegangen ist, authentifiziert sich der Versender 2 beim zentralen Verwaltungsserver 6 und übermittelt seinen ersten Schlüssel S1 an den zentralen Sicherungsserver 7, vgl. Übermittlung 39, um dadurch den Frachtbrief 19a für eine Entschlüsselung und Übermittlung an den Empfänger 3 freizugeben, und um dadurch den Eigentumsübergang am Frachtcontainer bzw. dessen Inhalt zu bewirken. Die Überwachung des Zahlungseingangs und die Freigabe des Frachtbriefs durch den Versender 2 kann manuell oder auch automatisiert erfolgen, etwa durch geeignete Software-Applikationen auf seinem Endgerät 2a.

Mittels der beiden Schlüssel S1, S2 entschlüsselt der zentrale Sicherungsserver 7 nun den verschlüsselten Frachtbrief 19a. Der vollständig entschlüsselte Frachtbrief 19b wird an den Empfänger 3 elektronisch übermittelt 40, etwa als pdf-Datei auf dessen Endgerät 3a, und wird typischerweise vom Empfänger 3 ausgedruckt. Der vollständig entschlüsselte Frachtbrief 19b legitimiert den Empfänger 3 als Eigentümer des Inhalt des Frachtcontainers 1, und damit als Berechtigten, die enthaltene Ware an sich zu nehmen. Der Empfänger 3 verbaut beispielsweise sodann im Frachtcontainer 1 transportierte Getriebeteile in Autos (nicht näher dargestellt).

Man beachte, dass in einer Variante der Erfindung vorgesehen sein kann, dass der verschlüsselte Frachtbrief 19a für seine vollständige Entschlüsselung nicht nur die gemeinsame Anwendung der beiden Schlüssel S1 und S2 voraussetzt, sondern die gleichzeitige Anwendung wenigstens eines weiteren Schlüssels, etwa eines dritten Schlüssels S3 (nicht dargestellt). Ein weiterer Schlüssel kann beispielsweise vom Betreiber des zentralen Serversystems vorgehalten werden, um die Sicherheit des Computersystems 42 zu erhöhen. Ebenso kann ein weiterer am Handel des Frachtcontainers beteiligter, vertraglich festgelegter Partner, etwa ein Garantiegeber, einen weiteren Schlüssel erhalten. Der wenigstens eine weitere Schlüssel wird vom gesicherten Erzeugermodul bei der Erstellung des verschlüsselten Frachtbriefs mit erzeugt, und wird an einen (jeweiligen) weiteren Schlüsselverantwortlichen übermittelt. Der wenigstens eine weitere Schlüsselverantwortliche wird im Transportplan aufgeführt. Für die Entschlüsselung des Frachtbriefs muss auch der wenigstens eine weitere Schlüsselverantwortliche sich beim zentralen Verwaltungsserver authentifizieren und dem zentralen Sicherungsserver seinen Schlüssel übermitteln.

Zusammenfassend betrifft die Erfindung ein Verfahren zur Handhabung eines Frachtcontainers (1), der von einem Versender (2) über einen oder mehrere Transporteure (11-14) an einen Empfänger (3) verbracht wird. Für den Frachtcontainer (1) wird elektronischer Frachtbrief (19a) mittels eines gesicherten Erzeugermoduls (17, 41) erzeugt, der in verschlüsselter Form auf einem zentralen Sicherungsserver (7) hinterlegt wird. Der Versender (2) und der Empfänger (3) erhalten jeweils einen elektronischen Schlüssel (S1, S2). Die Transporteure (11-14), und ggf. auch Inspekteure (10) wie die Zollbehörde, können entschlüsselte Teile (21a-24a, 30a) des elektronischen Frachtbriefs (19a) über eine Datenverbindung elektronisch anfordern, insbesondere um sich für den Weitertransport zu legitimieren, oder um den Frachtcontainer (1) überprüfen zu können. Wenn der Empfänger (3) mit dem erhaltenen Frachtcontainer (1) zufrieden ist, übermittelt er elektronisch seinen Schlüssel (S2) an den zentralen Sicherungsserver (7). Der Versender (2) übermittelt elektronisch seinen Schlüssel (S1) an den zentralen Sicherungsserver (7), wenn er den Frachtbrief (19a) freigeben will, insbesondere nachdem er eine vereinbarte Zahlung (37) eines Kaufpreises erhalten hat. Unter gemeinsamer Anwendung der beiden Schlüssel (S1, S2) kann der verschlüsselte elektronische Frachtbrief (19a) auf dem zentralen Sicherungsserver entschlüsselt werden und der entschlüsselte elektronische Frachtbrief (19b) an den Empfänger (3) elektronisch übermittelt werden. Damit ist der Eigentumsübergang an den Empfänger (3) bewirkt. Die Erfindung vereinfacht und verbilligt den Warenaustausch mittels Frachtcontainern (1).

### Bezugszeichenliste

- 1: Frachtcontainer
- 2: Versender
- 2a: Endgerät, hier PC
- 3: Empfänger
- 3a: Endgerät, hier PC
- 4: Frachtplaner
- 5: Transportplan
- 6: zentraler Verwaltungsserver
- 7: zentraler Sicherungsserver
- 8: zentrales Serversystem
- 9: Hinterlegung Transportplan
- 10: Inspekteur
- 10a: Endgerät, hier Tablet
- 11: erster Transporteur
- 11a: Endgerät, hier Tablet
- 12: zweiter Transporteur
- 12a: Endgerät, hier Tablet
- 13: dritter Transporteur
- 13a: Endgerät, hier Tablet
- 14: vierter Transporteur
- 14a: Endgerät, hier Tablet
- 15: LKW
- 16: Bereitstellung Frachtcontainer
- 17: gesichertes Erzeugermodul (erster Transporteur)
- 17a: Schloss
- 17b: Siegel
- 18: Authentifizierung/Anforderung
- 19a: verschlüsselter Frachtbrief
- 19b: vollständig entschlüsselter Frachtbrief
- 20a: Übermittlung Schlüssel S1, S2
- 20b: Übermittlung Schlüssel S2
- 20c: Übermittlung Schlüssel S1
- 21a-24a: entschlüsselte Teile des Frachtbriefs
- 21b-24b: Teile des Transportplans
- 25: Transport Frachtcontainer
- 26: Schiff
- 27: Übermittlung verschlüsselter Frachtbrief
- 28: Authentifizierung/Anforderung
- 29: Authentifizierung/Anforderung
- 30a: entschlüsselter Teil des Frachtbriefs (Inspekteur)
- 30b: Teile des Transportplans (Inspekteur)
- 31: Transport Frachtcontainer
- 32: Transport Frachtcontainer
- 33: LKW
- 34: Authentifizierung/Anforderung
- 35: Authentifizierung/Anforderung (Inspekteur)
- 36: Transport Frachtcontainer
- 37: Zahlung Kaufpreis
- 38: Übermittlung Schlüssel S2
- 39: Übermittlung Schlüssel S1
- 40: Übermittlung entschlüsselter Frachtbrief
- 41: gesichertes Erzeugermodul (zentral)
- 42: Computersystem
- S1: erster Schlüssel
- S2: zweiter Schlüssel

## Patentansprüche

1. Verfahren zur Handhabung eines Frachtcontainers (1), der von einem Versender (2) über einen oder mehrere Transporteure (11-14) an einen Empfänger (3) verbracht wird,
mit folgenden Schritten:
a) Ein Versender (2) stellt einen Frachtcontainer (1) bereit (16), und ein Transportplan (5) für den Frachtcontainer (1) wird erstellt und auf einem zentralen Verwaltungsserver (6) hinterlegt (9), wobei der Transportplan (5) zumindest den Versender (2), einen oder mehrere Transporteure (11-14) und einen Empfänger (3) des Frachtcontainers (1) enthält;
b) Mit einem gesicherten Erzeugermodul (17, 41) wird ein verschlüsselter elektronischer Frachtbrief (19a) erstellt, wobei der verschlüsselte elektronische Frachtbrief (19a) nur durch eine gemeinsame Anwendung eines ersten Schlüssels (S1) und eines zweiten Schlüssels (S2) vollständig entschlüsselbar ist, und wobei Teile (21a-24a, 30a) des verschlüsselten elektronischen Frachtbriefs (19a) ohne die beiden Schlüssel (S1, S2) entschlüsselbar sind;
c) Der verschlüsselte elektronische Frachtbrief (19a) wird an einen zentralen Sicherungsserver (7) übermittelt (27) und auf diesem gespeichert, und der erste Schlüssel (S1) wird an den Versender (2) des Frachtcontainers (1) übermittelt (20a, 20c), und der zweite Schlüssel (S2) wird an den Empfänger (3) des Frachtcontainers (1) übermittelt (20a, 20b);
d) Der Frachtcontainer (1) wird über einen oder mehrere Transporteure (11-14) zum Empfänger (3) verbracht (25, 31, 32, 36), wobei
• ein jeder Transporteur (11-14) sich beim zentralen Verwaltungsserver (6) authentifiziert und einen entschlüsselten Teil (21a-24a) des Frachtbriefs (19a) des Frachtcontainers (1) vom zentralen Sicherungsserver (7) anfordert (18, 28, 29, 34);
• und wenn eine Überprüfung des zentralen Verwaltungsservers (6) ergibt, dass der Transporteur (11-14) im hinterlegten Transportplan (5) des Frachtcontainers (1) vorgesehen ist, wird ein entschlüsselter Teil (21a-24a) des Frachtbriefs (19a) an den Transporteur (11-14) übermittelt, mit dem der Transporteur (11-14) seine Berechtigung zum Weitertransport des Frachtcontainers (1) nachweisen kann;
e) Der Empfänger (3) überprüft den Frachtcontainer (1), und wenn der Empfänger (3) den Frachtcontainer (1) akzeptieren will, authentifiziert sich der Empfänger (3) beim zentralen Verwaltungsserver (6) und übermittelt (38) den zweiten Schlüssel (S2) an den zentralen Sicherungsserver (7);
f) Wenn der Versender (2) den Frachtcontainer (1) für den Empfänger (3) freigeben will, authentifiziert sich der Versender (2) beim zentralen Verwaltungsserver (6) und übermittelt (39) den ersten Schlüssel (S1) an den zentralen Sicherungsserver (7);
g) Wenn der zweite Schlüssel (S2) in Schritt e) und der erste Schlüssel (S1) in Schritt f) an den zentralen Sicherungsserver (7) übermittelt wurden (38, 39), wird mit diesen der auf dem zentralen Sicherungsserver (7) gespeicherte verschlüsselte elektronische Frachtbrief (19a) vollständig entschlüsselt, und der vollständig entschlüsselte elektronische Frachtbrief (19b) wird an den Empfänger (3) des Frachtcontainers (1) übermittelt (40), mit dem der Empfänger (3) seine Berechtigung nachweisen kann, den Inhalt des Frachtcontainers (1) an sich zu nehmen.

2. Verfahren nach Anspruch 1, **dadurch gekennzeichnet, dass** das gesicherte Erzeugermodul (17, 41) den elektronischen Frachtbrief (19a, 19b) bei seiner Erzeugung authentifiziert, eindeutig kennzeichnet und verschlüsselt.

3. Verfahren nach einem der vorhergehenden Ansprüche, **dadurch gekennzeichnet, dass** der jeweilige Transporteur (11-14) in Schritt d) zusätzlich zu dem Teil (21a-24a) des Frachtbriefs (1a, 19b) auch einen Teil (21b-24b) des hinterlegten Transportplans (5) übermittelt bekommt, insbesondere Informationen über einen vorherigen Transporteur (11-14) und/oder einen nächsten Transporteur (11-14) und/oder Übergabezeiten und/oder Übergabeorte.

4. Verfahren nach einem der vorhergehenden Ansprüche, **dadurch gekennzeichnet, dass** der verschlüsselte elektronische Frachtbrief (19a) nach seiner Übermittlung (27) an den zentralen Sicherungsserver (7) in Schritt c) vom gesicherten Erzeugermodul (17; 41) entfernt wird.

5. Verfahren nach einem der vorhergehenden Ansprüche, **dadurch gekennzeichnet, dass** der erste und zweite Schlüssel (S1, S2) nach ihrer Übermittlung (20a-20c) in Schritt c) vom gesicherten Erzeugermodul (17; 41) und ggf. vom zentralen Verwaltungsserver (6) entfernt werden.

6. Verfahren nach einem der vorhergehenden Ansprüche, **dadurch gekennzeichnet, dass** der elektronische Frachtbrief (19a, 19b) nach seiner vollständigen Entschlüsselung und Übermittlung (40) an den Empfänger (2) in Schritt g) vom zentralen Sicherungsserver (7) gelöscht wird.

7. Verfahren nach einem der vorhergehenden Ansprüche, **dadurch gekennzeichnet, dass** das gesicherte Erzeugermodul (17, 41) für die Erstellung des verschlüsselten elektronischen Frachtbriefs (19a) Informationen aus dem auf dem zentralen Verwaltungsserver (6) hinterlegten Transportplan (5) übermittelt bekommt.

8. Verfahren nach einem der vorhergehenden Ansprüche, **dadurch gekennzeichnet,**
**dass** der hinterlegte Transportplan (5) des Frachtcontainers (1) oder der zentrale Verwaltungsserver (6) für eine Vielzahl von Transportplänen (5), darunter den hinterlegten Transportplan (5) des Frachtcontainers (1), wenigstens einen Inspekteur (10) enthält,
**dass** während Schritt d) sich ein Inspekteur (10) beim zentralen Verwaltungsserver (6) authentifiziert und einen entschlüsselten Teil (30a) des Frachtbriefs (19a) anfordert,
und **dass** wenn eine Überprüfung des zentralen Verwaltungsservers (6) ergibt, dass der Inspekteur (10) im hinterlegten Transportplan (5) des Frachtcontainers (1) oder im zentralen Verwaltungsserver (6) für eine Vielzahl von Transportplänen (5), darunter den hinterlegten Transportplan (5) des Frachtcontainers (1), vorgesehen ist, ein entschlüsselter Teil (30a) des Frachtbriefs (19a) an den Inspekteur (10) übermittelt wird.

9. Verfahren nach Anspruch 8, **dadurch gekennzeichnet,**
**dass** nach der Übermittlung des entschlüsselten Teils (30a) an den Inspekteur (10) sodann der bisherige elektronische Frachtbrief (19a) für den Frachtcontainer (1) gelöscht wird und für das weitere Verfahren durch einen neuen elektronischen Frachtbrief für den Frachtcontainer (1) ersetzt wird, der auf dem zentralen Sicherungsserver (7) verschlüsselt gespeichert wird, wobei für den neuen verschlüsselten elektronischen Frachtbrief ein neuer erster Schlüssel an den Versender (2) und ein neuer zweiter Schlüssel an den Empfänger (3) übermittelt werden.

10. Verfahren nach einem der vorhergehenden Ansprüche, **dadurch gekennzeichnet, dass** das gesicherte Erzeugermodul (17) von einem ersten Transporteur (11) betrieben wird, der vom Versender (2) den bereitgestellten Frachtcontainer (1) erhält.

11. Verfahren nach einem der vorhergehenden Ansprüche, **dadurch gekennzeichnet, dass** auf dem Frachtcontainer (1) ein Identifikationscode angebracht ist, insbesondere in Form von vier Buchstaben und sieben Ziffern, und dass der hinterlegte Transportplan (5) des Frachtcontainers (1) und der elektronische Frachtbrief (19a, 19b) den Identifikationscode enthalten.

12. Verfahren nach einem der vorhergehenden Ansprüche, **dadurch gekennzeichnet, dass** der elektronische Frachtbrief (19b) nach der vollständigen Entschlüsselung ausdruckbar ist, nicht jedoch der verschlüsselte elektronische Frachtbrief (19a),
insbesondere wobei der elektronische Frachtbrief (19b) nach seiner vollständigen Entschlüsselung und Übermittlung (40) an den Empfänger (3) gemäß Schritt g) vom Empfänger (3) ausgedruckt wird.

13. Verfahren nach einem der vorhergehenden Ansprüche, **dadurch gekennzeichnet, dass** in Schritt f) der Versender (2) überprüft, ob er eine festgelegte Zahlung (37) für den Frachtcontainer (1) erhalten hat, und der Versender (2) den Frachtcontainer (1) für den Empfänger (3) freigibt, wenn die festgelegte Zahlung (37) bei ihm eingegangen ist, insbesondere wobei ein Endgerät (2a) des Versenders (2) so eingerichtet ist, dass der erste Schlüssel (S1) automatisch vom Endgerät (2a) an den zentralen Sicherungsserver (7) übermittelt wird, wenn das Endgerät (2a) den Eingang der festgelegten Zahlung (37) beim Versender (2) automatisch festgestellt hat.

14. Verfahren nach einem der vorhergehenden Ansprüche, **dadurch gekennzeichnet, dass** der eine oder die mehreren Transporteure (11-14) den Frachtcontainer (1) per Schiff (26) und/oder per Eisenbahn und/oder per LKW (33) und/oder per Flugzeug transportieren.

15. Verfahren nach einem der vorhergehenden Ansprüche, **dadurch gekennzeichnet, dass** der Versender (2) und der Empfänger (3) des Frachtcontainers (1) sowie der eine oder die mehreren Transporteure (11-14) und ggf. der wenigstens eine Inspekteur (10) mit Endgeräten (2a, 3a, 10a-14a), insbesondere PCs, Tablets oder Smartphones, mit dem zentralen Verwaltungsserver (6) und/oder dem zentralen Sicherungsserver (7) elektronisch kommunizieren, und dass weiterhin das gesicherte Erzeugermodul (17, 41) mit dem zentralen Verwaltungsserver (6) und/oder dem zentralen Sicherungsserver (7) elektronisch kommuniziert.

16. Computersystem (42) für die Durchführung eines Verfahrens nach einem der vorhergehenden Ansprüche zur Handhabung einer Vielzahl von Frachtcontainern (1), umfassend
- einen zentralen Sicherungsserver (7) und einen zentralen Verwaltungsserver (6),
- eine Vielzahl von gesicherten Erzeugermodulen (17, 41), die mit dem zentralen Sicherungsserver (7) und/oder dem zentralen Verwaltungsserver (6) elektronisch kommunizieren können;
- eine Vielzahl von Endgeräten (2a, 3a, 10a-14a), insbesondere PCs, Tablets oder Smartphones, die mit dem zentralen Sicherungsserver (7) und/oder dem zentralen Verwaltungsserver (6) elektronisch kommunizieren können, und die jeweils einem Versender (2) oder einem Empfänger (3) oder einem Transporteur (11-14) oder ggf. einem Inspekteur (10) zugeordnet sind.

17. Computersystem (42) nach Anspruch 16, **dadurch gekennzeichnet, dass** die gesicherten Erzeugermodule (17, 41) versiegelt sind, insbesondere wobei eine Harzversiegelung ein Öffnen eines Gehäuses eines jeweiligen gesicherten Erzeugermoduls (17, 41) verunmöglicht.
